# EUROPEAN PATENT SPECIFICATION

(11) **EP 1 942 251 B1**
(45) Date of publication and mention of the grant of the patent: **11.04.2012**
(21) Application number: 07123432.2
(22) Date of filing: 18.12.2007
(51) Int. Cl.: F01D 5/18, F01D 5/08, B22C 9/04, B22C 9/24

(54) **Cooled airfoil having reduced trailing edge slot flow and corresponding casting method**
Gekühlte Schaufel mit reduzierten Durchfluss durch die Abströmkantenschlitzen und zugehöriges Giessverfahren
Aube refroidie ayant un flux réduit dans les fentes de bord de fuite et procédé de moulage associé

(30) Priority: 26.12.2006 US 616176
(43) Date of publication of application: 09.07.2008
(73) Proprietor: GENERAL ELECTRIC COMPANY, Schenectady, NY 12345 (US)
(72) Inventor: Jendrix, Richard W., Liberty Township, OH 45044 (US); Williams, Cory, Maineville, OH 45039 (US)
(74) Representative: Williams, Andrew Richard

(56) References cited:
- EP-A1- 1 609 949
- US-A- 4 529 358
- US-A- 4 992 025
- US-A- 6 092 982

## Description

The present invention relates generally to gas turbine engine components, and more particularly to internally cooled airfoils used in gas turbine engine components.

US 6 092 982, US 4529358, US 4992025 and EP 1609949 disclose the prior art.

Temperatures within gas turbines may exceed 3000° F (1650° C), and cooling of turbine blades is very important in terms of blade longevity. The gas turbine engine operates by utilizing a compressor portion to compress atmospheric air to 10-25 times atmospheric pressure and adiabatically heating the air to between about 800° - 1250° F (427° C - 677° C) in the process. This heated and compressed air is directed into a combustor, where it is mixed with fuel. The fuel is ignited, and the combustion process heats the gases to very high temperatures, in excess of 3000° F (1650° C). These hot gases pass through the turbine, where airfoils fixed to rotating turbine disks extract energy to drive the fan and compressor of the engine and the exhaust system, where the gases provide sufficient thrust to propel the aircraft. To improve the efficiency of operation of the aircraft engine, combustion temperatures have been raised. Of course, as the combustion temperature is raised, steps must be taken to prevent thermal degradation of the materials forming the flow path for these hot gases of combustion.

Aircraft gas turbine engines have a so-called High Pressure Turbine (HPT) to drive the compressor. The HPT is located aft of the combustor in the engine layout and experiences the highest temperature and pressure levels (nominally, - 3000° F (1850° C) and 300 psia (2 MPa), respectively) developed in the engine. The HPT also operates at very high rotational speeds (10,000 RPM for large high-bypass turbofans, 50,000 for small helicopter engines). There may be more than one stage of rotating airfoils in the HPT. In order to meet life requirements at these levels of temperature and pressure, HPT components are air-cooled, typically from bleed air taken from the compressor, and are constructed from high-temperature alloys.

Without cooling, turbine blades would rapidly deteriorate. Improved cooling for turbine blades is very desirable, and much effort has been devoted by those skilled in the blade cooling arts to devise improved geometries for the internal cavities within turbine blades, in order to enhance cooling. Since the combustion gases are hot, the turbine vanes and blades are typically cooled with a portion of compressor air bled from the compressor for this purpose. Diverting any portion of the compressor air from use in the combustor necessarily decreases the overall efficiency of the engine. Accordingly, it is desired to cool the vanes and blades with as little compressor bleed air as possible.

Turbine rotor blades with internal cooling circuits are typically manufactured using an investment casting process commonly referred to as the lost wax process. This process comprises enveloping a ceramic core defining the internal cooling circuit in wax shaped to the desired configuration of the turbine blade. The wax assembly is then repeatedly dipped into a liquid ceramic solution such that a hard ceramic shell is formed thereon. Next, the wax is removed from the shell by heating so that the remaining mold consists of the internal ceramic core, the external ceramic shell and the space therebetween, previously filled with wax. The empty space is then filled with molten metal. After the metal cools and solidifies, the external shell is broken and removed, exposing the metal that has taken the shape of the void created by the removal of the wax. The internal ceramic core is dissolved via a leaching process. The resulting metal component has the desired shape of the turbine blade with the internal cooling circuit and cooling orifices.

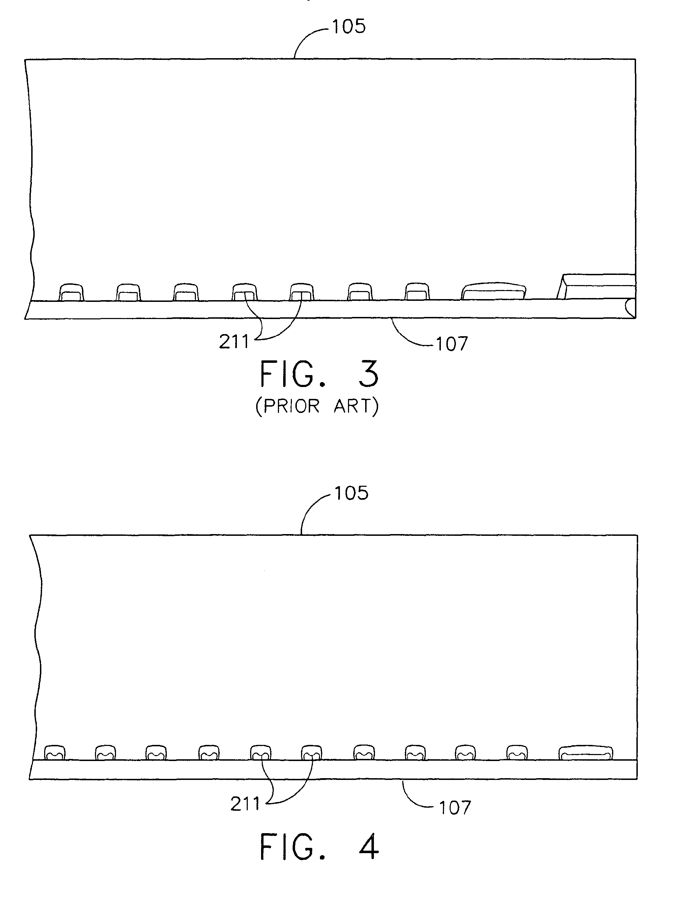

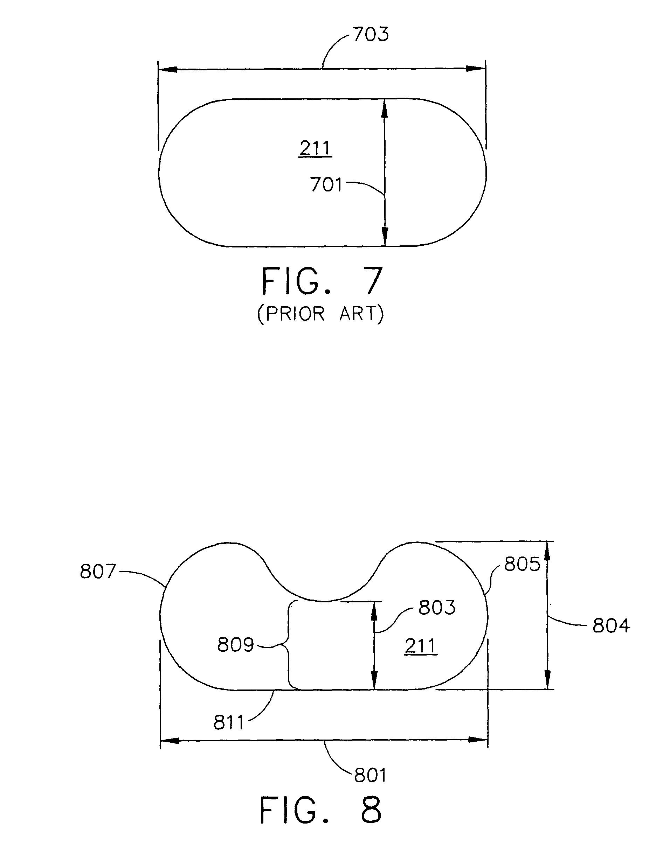

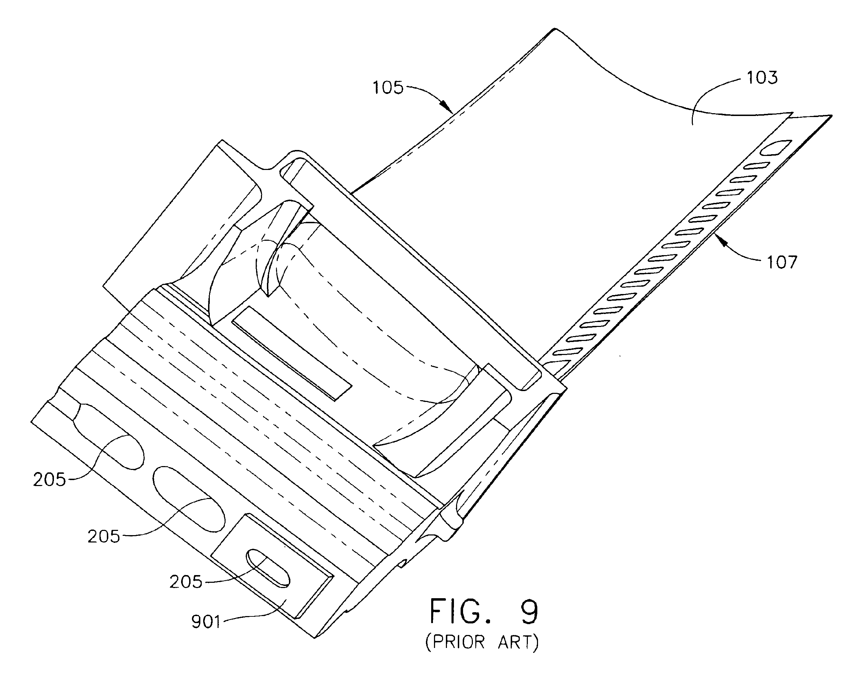

In casting turbine blades with serpentine cooling circuits, the internal ceramic core is formed as a serpentine element having a number of long, thin branches. This presents the challenge of making the core sturdy enough to survive the pouring of the metal while maintaining the stringent requirements for positioning the core. Currently, the trail edge slots are cast utilizing substantially oval core insert projections that provide a slot size sufficiently large, typically greater than about 0.013 inches (0,33 mm) to provide strength to the core and provide sufficient cooling along the trail edge of the turbine component. FIG. 3 shows a known airfoil configuration having trailing edge openings 211 having a known arrangement along trailing edge 107. The trailing edge openings 211 have a substantially oval geometry (i.e., a geometry having a substantially uniform width across a length) that allows the passage of an excessive quantity of cooling fluid 204 and undesirably requires a cooling fluid 204 restriction, such as a root plate, on the cooling fluid 204 feed to provide efficient operation of the blade 100. Another view of a prior art arrangement is shown in FIG. 7, which illustrates a cross-section of a trailing edge opening 211, wherein the cross-sectional geometry has a substantially oval geometry. The trailing edge opening 211 known in the art was previously required to have a width 701 that is substantially uniform across the length 703 to provide sufficient ceramic core 501 strength during casting. However, the cooling slots currently formed provide excessive flow of cooling fluid at reduced cavity pressure during operation, requiring the use of a root plate 901 on the blade feed to limit the flow of cooling fluid. FIG. 9 shows a known turbine blade 100 arrangement having a root plate 901 disposed on inlet openings 205. The root plate undesirably increases manufacturing costs and provides additional maintenance costs by requiring the installation of an additional component adjacent the turbine component.

Accordingly, there is a need for an airfoil component in which cooling fluid flow through the trail edge slots is decreased, while the core during fabrication is sufficiently robust to withstand casting of the turbine component.

A first aspect of the present invention includes an airfoil component according to claim 1.

Another aspect of the present invention includes a method for casting a gas turbine engine airfoil component, according to claim 7.

An advantage of an embodiment of the present invention is that the amount of bleed air from the compressor may be reduced and gas turbine engine operation may be more efficient.

Another advantage of an embodiment of the present invention is that the reduced cooling flow of cooling fluid from the trailing edge reduces or eliminates the need for other fluid flow restrictions, such as root plates.

Various features and advantages of the present invention will be apparent from the following more detailed description of the preferred embodiment, taken in conjunction with the accompanying drawings which illustrate, by way of example, the principles of the invention, and in which:
FIG. 1 illustrates an elevational perspective view of a turbine blade according to an embodiment of the present invention.
FIG. 2 illustrates a partial cutaway view of a turbine blade according to an embodiment of the present invention.
FIG. 3 illustrates a perspective view of an airfoil having trailing edge openings known in the art.
FIG. 4 illustrates a perspective view of an airfoil having trailing edge openings according to an embodiment of the present invention.
FIG. 5 illustrates a perspective view of a core insert according to an embodiment of the present invention.
FIG. 6 illustrates an enlarged perspective view of a core insert according to an embodiment of the present invention.
FIG. 7 illustrates a cross-sectional geometry of a trailing edge opening known in the art.
FIG. 8 illustrates a cross-sectional geometry of a trailing edge opening according to an embodiment of the present invention.
FIG. 9 illustrates a bottom perspective view a turbine blade having a root plate according to an embodiment of the present invention.

Wherever possible, the same reference numbers are used throughout the drawings to refer to the same or like parts.

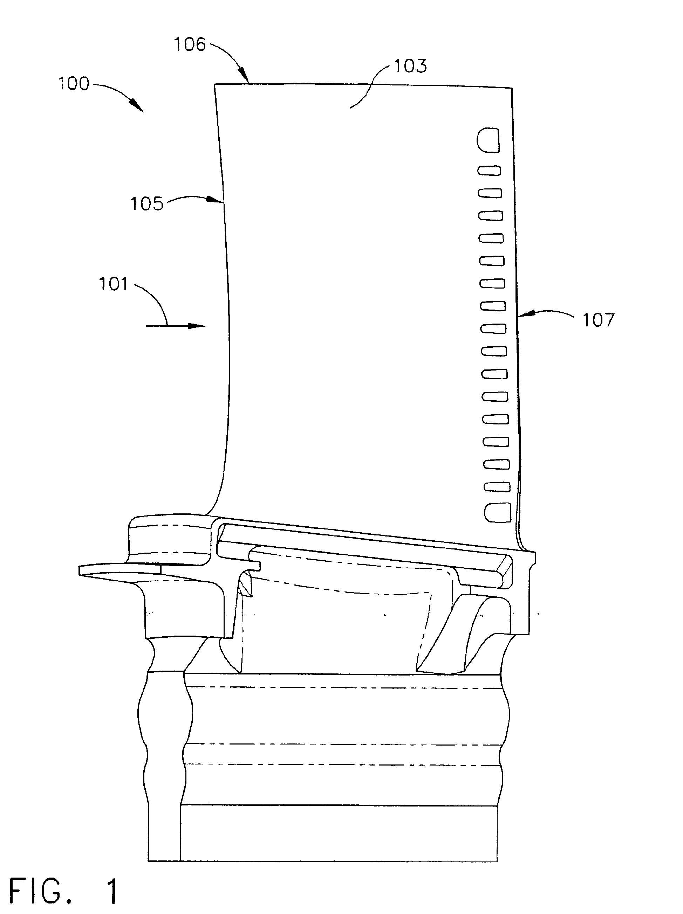

Illustrated in FIG. 1 is an exemplary turbine blade 100 for a gas turbine engine designed to be operated in a hot gas stream that flows in an axial flow downstream direction. During operation of the blade 100, combustion gases 101 are generated by a combustor (not shown) and flow downstream over the airfoil 103. The blade 100 includes a hollow airfoil 103 and a conventional root 104 used to secure the blade 100 to a rotor disk (not shown) of the gas turbine engine. The airfoil 103 includes an upstream leading edge 105, tip 106 and a downstream trailing edge 107 which is spaced chordally apart from the leading edge 105. The airfoil 103 extends longitudinally in a radial direction away from the root 104.

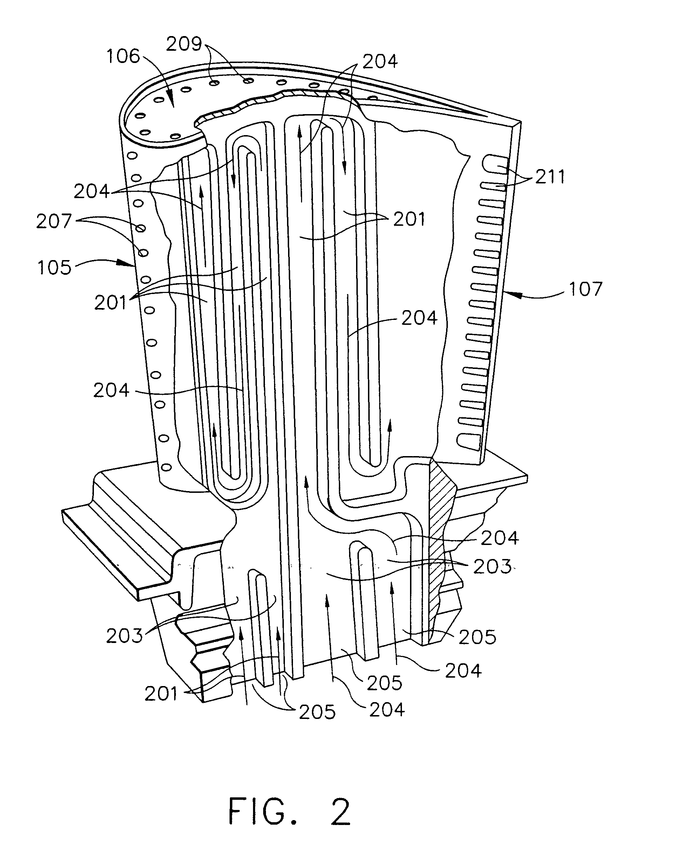

As shown in FIG. 2, the airfoil 101 includes an internal serpentine cooling circuit having cooling passages 201 traversing the hollow portions of airfoil 103. The configuration of cooling passageways 201 is not particularly limited and may include a plurality of circuits 203 that receives a cooling fluid 204, such as compressed air bled from the compressor of the gas turbine engine (not shown), through inlet openings 205. Preferably, serpentine cooling circuit 203 are constructed so as to cause a serpentine cooling fluid 204 within the cooling circuit 203 to flow through the passages 201 and exit through leading edge openings 207, tip openings 209, trailing edge openings 211. The flow of cooling fluid 204 thereby cools the airfoil 103 from the heat of the combustion gases 101 flowing over the outer surfaces thereof. In addition, airfoil 103 may include openings along the outer walls, the leading edge and/or the tip surfaces, as desired, to provide film cooling to various surfaces of the airfoil 103. As shown in FIG. 2, these film cooling openings 207 and 209 may be disposed through the outer wall along leading edge 105 and tip 106, respectively. The present invention is not limited to the arrangement of passages 201 or openings 207 and 209 shown and may include any suitable arrangement of passages 201 that provides cooling to the airfoil 103.

The trailing edge openings 211 receive a flow of cooling fluid 204 wherein the cooling fluid 204 flows through the trailing edge openings 211 and is discharged from the airfoil 103. Cooling air discharge apertures or trailing edge openings 211 are preferably designed to provide impingement cooling of the trailing edge 107. The present invention utilizes a configuration of trailing edge openings 211 that provides efficient cooling, without the need for a root plate or other cooling fluid 204 restriction, allowing for efficient gas turbine engine operation.

Although an exemplary gas turbine blade 100 is illustrated in FIGs. 1 and 2, the invention applies equally as well to substantially fixed turbine stator vanes having similar airfoils and turbine shrouds, which may be similarly cooled in accordance with the present invention. Further, the airfoil 103 may have any other conventional features for enhancing the cooling thereof, such as turbulators or pins (not shown), which are well known in the art. In addition, thermal barrier coatings (TBCs), which are well known in the technology, may also be used to improve thermal characteristics of the airfoil 103.

FIG. 4 shows an airfoil 103 having trailing edge openings 211 having an arrangement of trailing edge openings 211 along trailing edge 107 according to an embodiment of the present invention. In this embodiment, the trailing edge openings 211 having a pinched geometry that allow a flow rate of cooling fluid 204 that is less than the flow of cooling fluid 204 through the trailing edge openings 211 of FIG. 3. The reduced cooling fluid 204 flow provides efficient cooling, without the need for a root plate or other cooling fluid 204 restriction, allowing for efficient gas turbine engine operation.

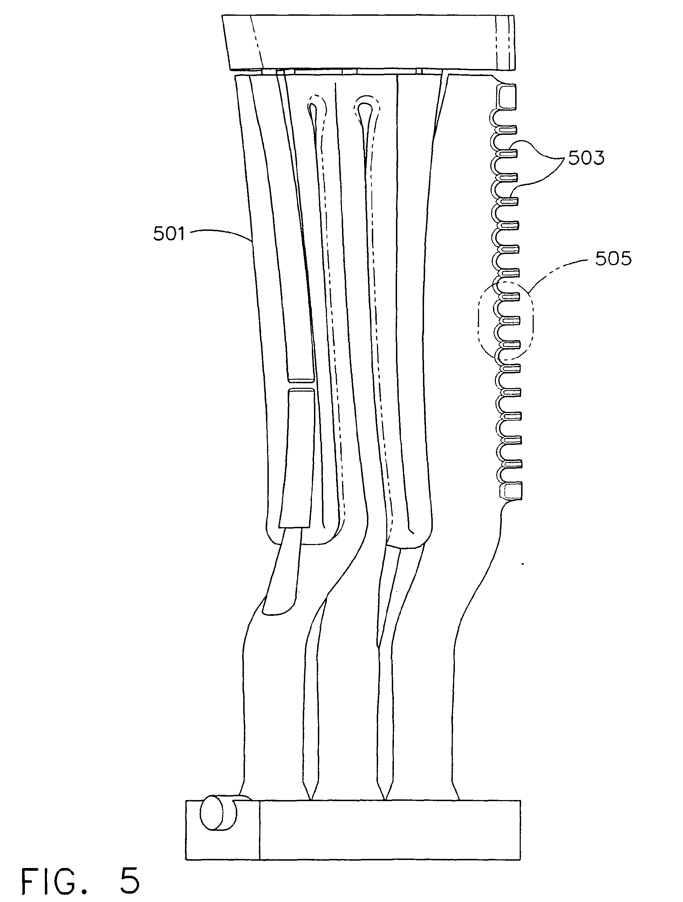

FIG. 5 shows a core assembly for casting turbine blades with serpentine cooling circuits, the internal ceramic core 501 is formed as a serpentine element having a number of long, thin branches. The internal ceramic core 501 is formed as a serpentine element having a number of long, thin branches. The ceramic core 501 has mechnical properties, such as strength, sufficient to withstand the pouring of casting material (e.g., superalloy metal) while maintaining the tight positioning requirement for the ceramic core 501 during casting. The casting of the turbine blade 100 may be performed using conventional turbine blade 100 casting methods. For example, the turbine blade 100 may be investment cast from a directionally solidified or single crystal superalloy around ceramic core 501. Upon completion of the casting and removal of the outer ceramic material, the ceramic core 501 may be chemically removed to provide the hollow turbine blade 100.

An embodiment of the present invention utilizes a ceramic core 501 that is formed utilizing cores insert projections 503 having a geometry corresponding to the pinched geometry trailing edge openings 211. The pinched trail edge openings 211 are cast utilizing ceramic core 501 insert projections 503 that provide a slot geometry having a pinched geometry to provide strength to the ceramic core 501 and provide sufficient cooling along the trailing edge opening 211 of the turbine component.

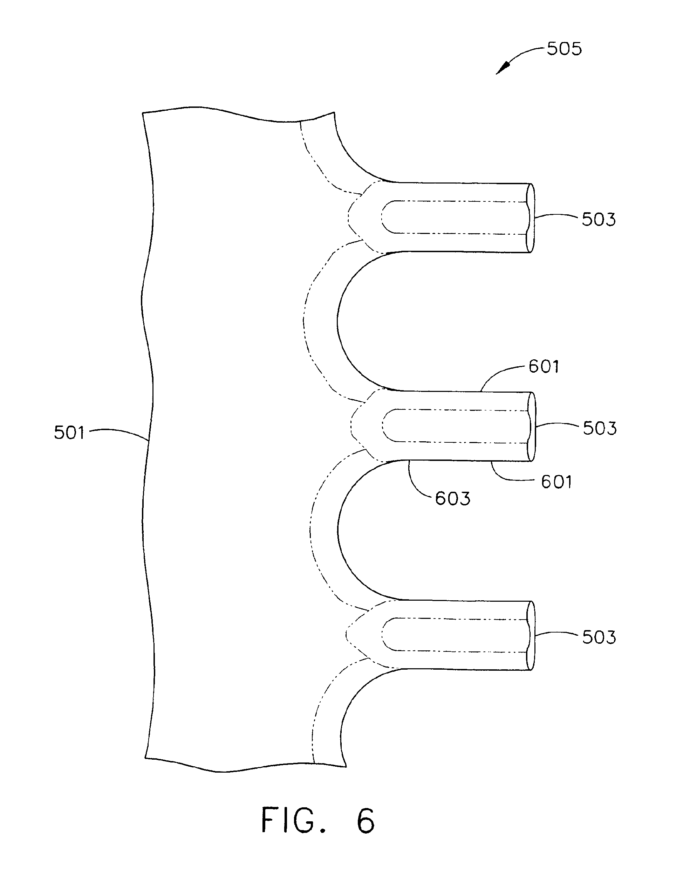

FIG. 6 shows an enlarged view of portion 505 of FIG. 5 illustrating ceramic core 501 insert projections 503. As better shown in the enlarged view of portion 505 in FIG. 6, the ceramic core 501 insert projection 503 geometry includes outer edge projections 601 providing one or more ribs or splines connected by a web portion 603, which extends between outer edge projections 601. While not limited to the geometry shown in FIGs. 5 and 6, the insert projections 503 preferably include a minimum and a maximum thickness across the length of the web portion 603. For example, the web portion 603 may have a thickness (i.e., a thickness measured along an axis into the paper, as shown in FIGs 5 and 6) along the web portion 603 that is less than about 90% of the thickness of the outer edge projections 601, preferably the thickness of the web portion 603 is less than about 85% of the thickness of the outer edge projections 601 and more preferably the thickness web portion 603 is less than about 80% of the thickness of the outer edge projections 601. The combination of the outer edge projections 601 and the web portion 603 provides sufficient mechanical properties to permit casting of the turbine blade 100 and to maintain positioning during casting. The ceramic core 501 insert corresponds to geometry in the finished turbine blade 100 having trailing edge openings 211, when the ceramic core 501 insert is removed, that reduces or eliminates excessive flow of cooling fluid 204 at reduced cavity pressure during operation. The flow of cooling fluid 204 is sufficiently limited by the trailing edge openings 211 to reduce or eliminate the need for a root plate on the blade feed to limit the flow of cooling fluid 204.

FIG. 8 illustrates an embodiment of the invention having a pinched geometry. By pinched geometry it is meant that the cross-sectional geometry of the trailing edge opening 211 includes an elongated opening having a first dimension 801 arranged in the elongated direction and a second minimum dimension 803 and second maximum dimension 804 that are substantially perpendicular to the first dimension. The first dimension 801 includes a first end 805 and a second end 807 wherein the second minimum dimension 803 includes a minimum value at a location between the first end 805 and the second end 807. In a preferred embodiment, the trailing edge opening 211 has a pinched geometry wherein the first end 805 and second end 807 each include substantially circular cross-sectional geometries extending for a second maximum dimension 804 connected by a reduced thickness chord 809 extending along a side edge 811 of trailing edge opening 211. For example, the second maximum dimension 804 may have a maximum near the first end 805 and second end 807 of about 0.013 inches and the second minimum dimension 803 may be 0.010 inches along chord 809. The second minimum dimension 803 may be less than or equal to about 90% of the second maximum dimension 804, preferably less than or equal to about 85% of the second maximum dimension 804 and still more preferably 80% of the second maximum dimension 804.

In another embodiment of the invention, the trailing edge opening 211 may include a plurality of second minimum dimensions 803 between first end 805 and second end 807, for example, wherein the second maximum dimension 804 is located at a location near the center of first dimension 801 a substantially T-shaped opening 211. Likewise, the second maximum dimension 804 may extend in two directions past second minimum dimension 803. The present invention is not limited to the above configurations of the first dimension 801, the second minimum dimension 803 and second maximum dimension 804 and may include a plurality of each or both of the second minimum dimension 803 and second maximum dimension 804. The present invention utilizes the cross-sectional geometry formed to provide a reduced amount of cooling fluid 204 flow, while providing a sufficiently strong ceramic core 501 insert that allows casting of the blade 100. The cooling fluid 204 is therefore used more efficiently and less cooling fluid 204 is bled from the compressor for increasing the overall efficiency of operation of the gas turbine engine.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof: Therefore, it is intended that the invention not be limited to the particular embodiment disclosed as the best mode contemplated for carrying out this invention, but that the invention will include all embodiments falling within the scope of the appended claims.

## Claims

1. An airfoil component (100) comprising:
a body having a leading edge (105) and a trailing edge (107);
an internal cooling passageway (201) through which a cooling fluid flows, in use and a plurality of elongated openings (211) being disposed along and adjacent the trailing edge (107) and being in communication with the internal cooling passageway (201);
**characterized in that** each opening (211) has a pinched geometry to restrict the flow of cooling fluid.

2. The component (100) of claim 1, wherein the opening (211) has an elongated geometry having first dimension (801) and a second dimension (803,804), the first dimension (801) having a first end (805) and a second end 807 disposed at opposite ends of the opening (211); and
the second dimension (803,804) being arranged perpendicular to the first dimension (801) and further including at least one minimum value (803) and at least one maximum value (804) disposed between the first (805) and second end (807).

3. The component (100) of claim 2, wherein the at least one minimum value (803) is less than about 90% of the maximum value (804).

4. The component (100) of claim 3, wherein the at least one minimum value (803) is less than about 80% of the maximum value (804).

5. The component (100) of any preceding claim, wherein the component (100) is a turbine blade or vane.

6. The component (100) of any preceding claim, wherein the component (100) is a turbine shroud.

7. A method of casting a gas turbine engine airfoil component, including :
- providing a core insert having core insert projections with outer edge projections (503) connected by a web portion (603), the outer edge projections (500) having a thickness along the web portion (603) that is greater than the thickness of the web portion,
- casting the airfoil component over the core insert,
- removing the core insert to provide a gas turbine engine airfoil component having cooling passages (201) and elongated openings (211) disposed along and adjacent a trailing edge of the airfoil component and in communication with the cooling passages (210), **characterized in** the elongated openings (210) having a pinched geometry.

8. The method of claim 7, wherein the web portion (603) has a thickness along the web portion (603) that is less than about 90% of the thickness of the outer edge projections (601).

9. The method of claim 8, wherein the web portion (603) has a thickness along the web portion (603) that is less than about 80% of the thickness of the outer edge projections (601).

## Patentansprüche

1. Schaufelblattkomponente (100), aufweisend:
einen Körper mit einer Vorderkante (105) und einer Hinterkante (107);
einen internen Kühlkanal (201), durch welchen Kühlfluid im Einsatz strömt, und mehrere längliche Öffnungen (211), die entlang der und angrenzend an die Hinterkante (107) angeordnet sind und mit dem internen Kühlkanal (201) in Verbindung stehen;
**dadurch gekennzeichnet, dass** jede Öffnung (211) eine verengte Geometrie hat, um die Strömung des Kühlfluids zu begrenzen.

2. Komponente (100) nach Anspruch 1, wobei die Öffnung (211) eine längliche Geometrie mit einer ersten Dimension (801) und einer zweiten Dimension (803, 804) hat, wobei die erste Dimension (801) ein erstes Ende (805) und ein zweites Ende (807) besitzt, die an gegenüberliegenden Enden der Öffnungen (211) angeordnet sind; und
wobei die zweite Dimension (803, 804) rechtwinklig zu der ersten Dimension (801) angeordnet ist und ferner wenigstens einen minimalen Wert (803) und wenigstens einen maximalen Wert (804) enthält, die zwischen dem ersten (805) und dem zweiten Ende (807) angeordnet sind.

3. Komponente (100) nach Anspruch 2, wobei der wenigstens eine minimale Wert (803) weniger als ca. 90 % des maximalen Wertes (804) ist.

4. Komponente (100) nach Anspruch 3, wobei der wenigstens eine minimale Wert (803) weniger als ca. 80 % des maximalen Wertes (804) ist.

5. Komponente (100) nach einem der vorstehenden Ansprüche, wobei die Komponente (100) eine Turbinenlaufschaufel oder -leitschaufel ist.

6. Komponente (100) nach einem der vorstehenden Ansprüche, wobei die Komponente (100) ein Turbinendeckband ist.

7. Verfahren zum Gießen einer Gasturbinen-Laufschaufelkomponente mit den Schritten:
Bereitstellen eines Kerneinsatzes, der Kerneinsatzvorsprünge mit durch einen Stegabschnitt (603) verbundenen Außenkantenvorsprüngen (503) hat, wobei die Außenkantenvorsprünge (500) eine Dicke entlang dem Stegabschnitt (603) haben, die größer als die Dicke des Stegabschnittes ist,
Gießen der Schaufelblattkomponente über den Kerneinsatz,
Entfernen des Kerneinsatzes, um eine Gasturbinentriebwerks-Schaufelkomponente mit Kühlkanälen (201) und länglichen Öffnungen (211) bereitzustellen, die entlang und angrenzend an einer Hinterkante der Schaufelkomponenten angeordnet sind und mit den Kühlkanälen (210) in Verbindung stehen, **dadurch gekennzeichnet, dass** die länglichen Öffnungen (210) eine verengte Geometrie haben.

8. Verfahren nach Anspruch 7, wobei der Stegabschnitt (603) eine Dicke entlang dem Stegabschnitt (603) hat, die weniger als ca. 90 % der Dicke der Außenkantenvorsprünge (601) ist.

9. Verfahren nach Anspruch 8, wobei der Stegabschnitt (603) eine Dicke entlang dem Stegabschnitt (603) hat, die weniger als ca. 80 % der Dicke der Außenkantenvorsprünge (601) ist.

## Revendications

1. Composant de pale profilée (100) comprenant :
un corps comportant un bord d'attaque (105) et un bord de fuite (107) ;
un passage de refroidissement interne (201) à travers lequel s'écoule un fluide de refroidissement pendant l'utilisation et une pluralité d'ouvertures allongées (211) disposées le long du bord de fuite (107) et de manière adjacente à celui-ci et en communication avec le passage de refroidissement interne (201) ;
**caractérisé en ce que** chaque ouverture (211) possède une géométrie pincée pour limiter l'écoulement du fluide de refroidissement.

2. Composant (100) selon la revendication 1, dans lequel l'ouverture (211) possède une géométrie allongée ayant une première dimension (801) et une deuxième dimension (803, 804), la première dimension (801) ayant une première extrémité (805) et une deuxième extrémité (807) disposées aux extrémités opposées de l'ouverture (211) ; et
la deuxième dimension (803, 804) étant agencée perpendiculairement à la première dimension (801) et comportant en outre au moins une valeur minimale (803) et au moins une valeur maximale (804) disposées entre la première (805) et la deuxième extrémité (807).

3. Composant (100) selon la revendication 2, dans lequel l'au moins une valeur minimale (803) est inférieure à environ 90 % de la valeur maximale (804).

4. Composant (100) selon la revendication 3, dans lequel l'au moins une valeur minimale (803) est inférieure à environ 80 % de la valeur maximale (804).

5. Composant (100) selon l'une quelconque des revendications précédentes, dans lequel le composant (100) est une pale ou une aube de turbine.

6. Composant (100) selon l'une quelconque des revendications précédentes, dans lequel le composant (100) est un carénage de turbine.

7. Procédé de coulage d'un composant de pale profilée de moteur à turbine à gaz incluant la fourniture d'un insert de noyau comportant des projections d'insert de noyau avec des projections de bord externe (503) reliées par une partie de toile (603), les projections de bord externe (500) ayant une épaisseur le long de la partie de toile (603) supérieure à l'épaisseur de la partie de toile,
le coulage du composant de pale profilée sur l'insert de noyau,
le retrait de l'insert de noyau pour fournir un composant de pale profilée de moteur à turbine à gaz comportant des passages de refroidissement (201) et des ouvertures allongées (211) disposés le long du bord de fuite du composant de pale profilée et de manière adjacente à celui-ci et en communication avec les passages de refroidissement (210), **caractérisé en ce que** les ouvertures allongées (210) ont une géométrie pincée.

8. Procédé selon la revendication 7, dans lequel la partie de toile (603) possède une épaisseur le long de la partie de toile (103) inférieure à environ 90 % de l'épaisseur des projections de bord externe (601).

9. Procédé selon la revendication 8, dans lequel la partie de toile (603) possède une épaisseur le long de la partie de toile (603) inférieure à environ 80 % de l'épaisseur des projections de bord externe (601).
